# EUROPEAN PATENT APPLICATION

(11) **EP 0 887 719 A1**
(43) Date of publication of application: **30.12.1998**
(21) Application number: 97949185.9
(22) Date of filing: 19.12.1997
(51) Int. Cl.: G05B 19/18, G05B 23/02

(54) **CONTROL METHOD FOR COMMUNICATION BETWEEN ROBOT CONTROLLER AND PERIPHERAL EQUIPMENT**

(30) Priority: 19.12.1996 JP 354377/96
(71) Applicant: FANUC LTD., Minamitsuru-gun, Yamanashi 401-05 (JP)
(72) Inventor: HASHIMOTO, Yoshiki, Kanagawa 257 (JP); ENOMOTO, Minoru Fanuc Dai3virakaramatsu, Minamitsuru-gun Yamanashi 401-05 (JP)
(74) Representative: Billington, Lawrence Emlyn
(86) International application number: JP9704728
(87) International publication number: WO9827475

(57) **Abstract**

A method of managing communications between a robot controller and a peripheral device in which the cause of a communication error can be found out easily. Each time a communication error occurs, states of a robot (3) and a the robot controller (1), i.e., information about a position and a posture of the robot, an operating state of input/output devices, information of identifying a program being executed, and the time when a communication error occurred are stored in a new log file and retained. After communications terminate, the log files are opened to search items of conditions common to communication errors, so that the cause of the communication errors are inferred and removed.

## Description

### Technical Field

The present invention relates to a method of managing communications between a controller and a peripheral device of a robot.

### Background Art

For managing communications between a robot controller and a peripheral device, there are known a method in which a communication is retried when a communication error has occurred due to noise or the like, and a method in which a communication is abandoned and an alarm message is displayed when the communication has not be normally completed after retrying the communication a predetermined number of times.

In such methods, however, it is difficult to find out a cause of the communication error and it takes long time to remove the cause. Thus, communication errors occur many times in the meantime between the robot controller and the peripheral device, to lower operation efficiency of the robot and the peripheral device.

### Disclosure of Invention

An object of the present invention is to provide a communication managing method for a controller and a peripheral device of a robot, in which the cause of communication errors is easily found out.

A communication managing method of the present invention comprises the steps of: performing communications between a robot controller and a peripheral device through a communication line to input and output data or signals; detecting a communication error in the communication; storing states of the robot and the robot controller at the time a communication error is detected; and displaying the stored states of the robot and the robot controller.

Since the states of the robot and the robot controller at the time when a communication error occurred can be known after termination of communications, the cause of the communication error can be found out easily.

By memorizing the time when the communication error is detected, the causes such as power breakdown, a thunderbolt or the like is easily specified.

The states of the robot and the robot controller to be stored includes information about a position and a posture of the robot, an operating state of input/output devices, information of specifying a program being executed, and so forth.

The number of communication errors which have been detected from a start of the robot operation is counted, and when the counted number exceeds a first predetermined value, a message demanding maintenance is displayed to thereby make it possible to remove the cause of the communication errors before things comes to a stage such that communication errors occur continuously so that the operation of the robot needs to be stopped. Further, when communication errors are successively detected a second predetermined number of times, an error message is displayed and the operation of the robot is stopped.

### Brief Description of Drawings

FIG. 1 is a functional block diagram of a robot, a controller thereof and a peripheral device (an arc welding machine);
FIG. 2 is a flowchart schematically showing processing for the communication management performed by the robot controller; and
FIG. 3 shows an example of displayed states of the robot and the robot controller.

### Best Mode of Carrying out the Invention

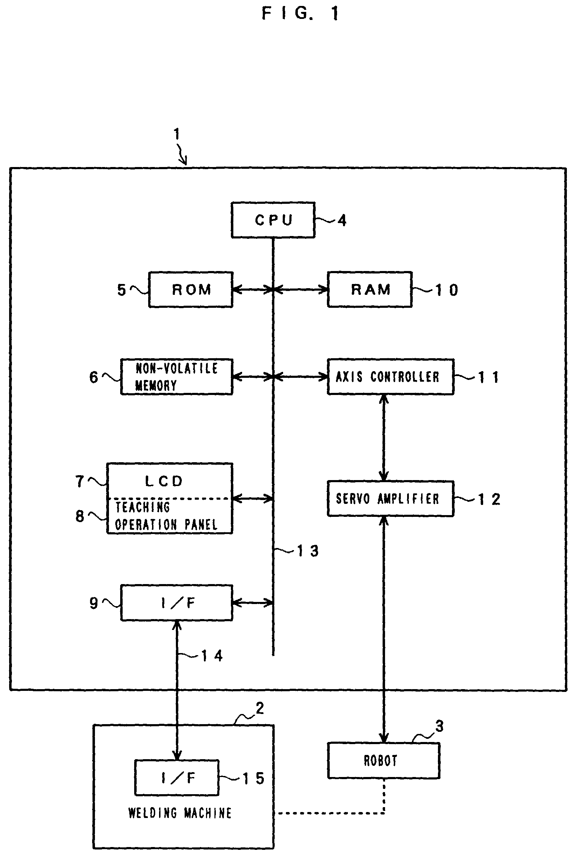

FIG. 1 shows a robot system in which a robot controller 1 and an arc welding machine 2, which is a peripheral device of a robot 3, are connected by a communication line 14 to input and output data and signals therebetween.

As shown in FIG. 1, the robot controller 1 for controlling the robot 3 and the arc welding machine 2 has a central processing unit (CPU) 4, and the CPU 4 is connected with a ROM 5, a RAM 10, a non-volatile memory 6, a teaching operation panel 8 with an LCD (liquid crystal display) 7, an interface 9 for connection with a peripheral device (in this case, the arc welding machine 2) and an axis controller 11 for drivingly controlling a servo motor for each axis of the robot 3 through a servo amplifier 12 by a bus 13.

The ROM 5 stores a program for controlling the entire system including the robot controller 1. A part of the RAM 10 is used for temporarily storage of data for processing performed by the CPU 4. The non-volatile memory 6 stores a robot driving program having a motion path for welding operation, moving speed in each path section, etc., and an empty storage region is reserved in the non-volatile memory 6 to store a log file for recording the time when a communication error occurred and states of the robot 3 and the robot controller 1 at the time when the communication error occurred.

The data and signals to be sent from the robot controller 1 to the arc welding machine 2 includes data of conditions of welding, start/end signals for welding. The robot controller 1 and the arc welding machine 2 send and receive the data and signals each other through an interface 15 of the arc welding machine 2, a communication line 14 and an interface 9 of the robot controller 1.

The arc welding machine 2 is mounted on a distal end of the robot 3 which is drivingly controlled by the robot controller 1 according to the robot driving program, and moves along a contour of an object of welding to perform an arc welding operation based on the welding condition data, the welding start/end signals, etc. transmitted from the robot controller 1 through the communication line 14. A controller of the arc welding machine 2 is separated from the robot controller 1 and the robot 3 but is placed in the vicinity of the robot 3.

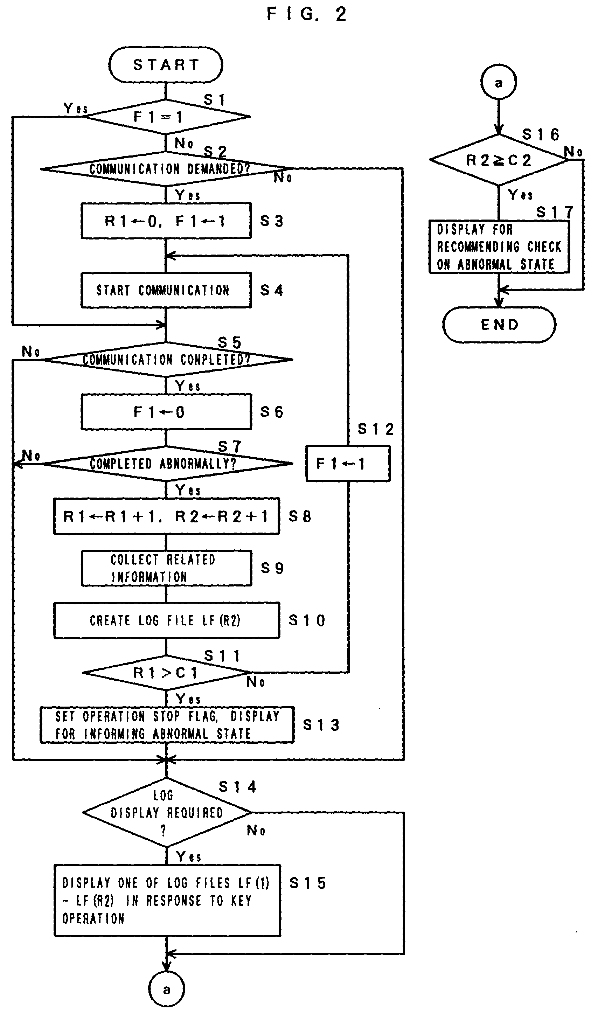

FIG. 2 shows processing by a communication management program to be performed repeatedly in background processing by the robot controller 1. The communication management program constantly monitors a statement or a block which is an execution unit of a robot driving program, and each time an execution unit for demanding communication is detected, it starts a communication program to transmit demanded data or a demanded signal to the arc welding machine 2.

After processing in each predetermined period of the communication management program is started, it is first determined whether or not an interrupt prohibiting flag F1 indicating that data is in transmission is set (Step S1). If the interrupt prohibiting flag F1 is not set, it is subsequently determined whether or not the statement or block which is an execution unit demands a communication (Step S2). If it does not demand a communication, it is determined whether or not a demand for a log display has been inputted through the teaching operating panel 8 (Step S14), and whether or not the value of a communication error counter P2 which counts and stores the number of communication errors which have occurred since the power ON of the robot controller 1 has reached a predetermined value C2 (Step S16). If both of the determinations are negative, the processing in the present period is terminated. Processing to be performed when a demand for the log display has been inputted through the teaching operation panel 8 and processing to be performed when the value of the communication error counter P2 has reached the predetermined value C2 will be described later.

In a state where data or a signal is not being transmitted by the communication program, that is, the determination in Step S1 is negative, if a demand of communication from the robot driving program is detected in Step S2, the communication management program first initializes the value of a retry counter R1 to be "0", sets the interrupt prohibiting flag F1 (Step S3), starts up the communication program to thereby start transmission of data or a signal designated by the robot driving program to the arc welding machine 2 (Step S4), and determines whether or not the communication has been completed or not, that is, whether or not a communication complete signal has been returned from the communication program (Step S5). It is to be noted that the communication program has a function of judging whether or not the communication has succeeded, and that the result of the judgment is returned to the communication management program together with the communication complete signal.

If the communication has not been completed, the communication management program performs determinations of Steps S14 and S16 in the same way as described above, and terminates the processing of the present period.

Then, the communication management program waits for a communication complete signal from the communication program, repeatedly performing determinations of Steps S1, S5, S14 and S16 in each predetermined period until the communication complete signal is returned from the communication program.

When it is confirmed that the communication has been completed, the communication management program once resets the interrupt prohibiting flag F1 to be "0" (Step S6), and confirmed whether or not the communication has normally completed (Step S7). As already described, the communication program itself has a function of judging whether communication has succeeded or not, and the result of that judgment is returned to the communication management program together with a communication complete signal in Step S5.

If the communication has been completed normally, there is no problem. Therefore, the communication management program performs determinations of Steps S14 and S16 in the same way as described above, and terminates the processing of the present period.

However, if it is confirmed that there is something abnormal in the communication, the same data or signal needs to be transmitted again to the welding machine 2.

In this case, the communication management program first increases the value of the retry counter R1 and the value of the communication error counter R2 respectively by "1" (Step S8), reads a program number of the currently executed robot driving program (and further a line number of the currently executed statement or block as an execution unit), a position and a posture of the robot 3 (i.e., a welding position), the present time, operating states of input-output devices (for example, operating states of I/O ports), and information about a state of the robot 3 and the robot controller 1 including the number of retrials of communication (i.e., the value of the retry counter RI) to thereby prepare a log file LF(R2), and stores the log file in the empty storage region in the non-volatile memory 6 (Step S9, Step S10).

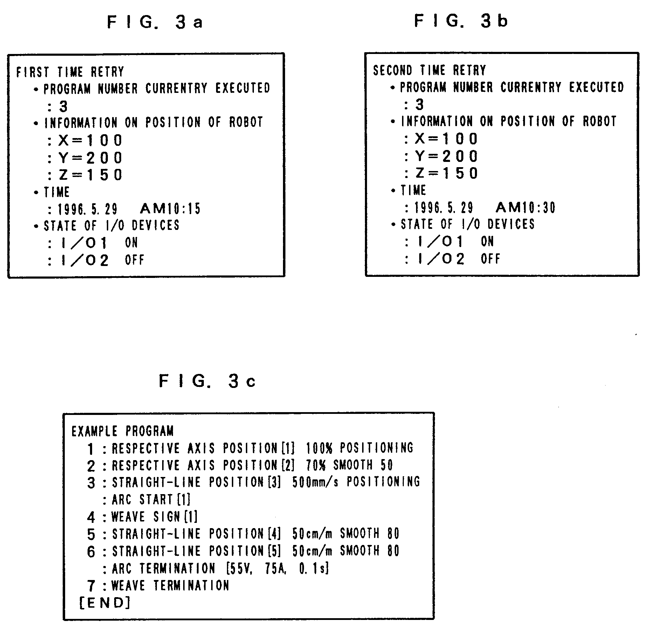

FIG. 3a shows an example of a format of a log file LF(R2). As already described, since the value of the communication error counter R2 is increased by "1" each time a communication error occurs, every value of the communication error counter is unique and therefore an existing file LF(R2) is not overwritten. In other words, each time a communication error occurs, a log file LF(1), LF(2), LF(3),... is created one by one, and all of those log files are stored in an empty storage region of the non-volatile memory 6.

Next, the communication management program determines whether or not the value of the retry counter R1 has reached an allowable limit value C1 set for the number of retrials (Step S11). If the value of the retry counter R1 has not reached the allowable limit value C1 for the number of retrials, the communication management program determines that normal communication will possibly be accomplished by retrying transmission of the data or signal on the same conditions. Thus, the communication management program sets the interrupt prohibiting flag F1 again (Step S12), starts the communication program to retry the transmission of the data or signal designated by the robot driving program to the welding machine 2 (Step S4), and waits for a communication complete signal from the communication program by repeatedly performing determination of Steps S1, S5, S14 and S16 in each predetermined period until the communication is completed, in the same way as described above.

The above-mentioned retrial means an operation of transmitting the same data or signal again in order to compensate a failure in the communication. The retrial is allowed as long as the number of retrials does not exceed the predetermined allowable value C1. It is to be noted that the value of the retry counter R1 is initialized to be "0" in the above-mentioned Step S3 each time a new demand for communication is received. Therefore, unlike the communication error counter R2, the retry counter R1 counts the number of communication errors occurred successively (or the number of retrials).

If a normal communication is accomplished while retrials are repeated, that is, if the determination of Step S7 turns negative, the communication management program regards that the communication has succeeded within the allowable retry number C1, and terminates retrials.

If the value of the retry counter R1 has reached the allowable value C1 set for the number of retrials, that is, if the determination of Step S11 turns positive, the communication management program determines that a normal communication will not be able to be accomplished even if the data or signal is transmitted again on the same conditions. Thus, the communication management program displays, on the LCD 7 of the teaching operation panel 8, an alarm message informing that communication can not be performed, sets an operation stop flag in the RAM 10 (Step S13), and abandons retrial of communication. The robot driving program detects the operation stop flag set in the RAM 10, stops the operation of the robot 3 and the arc welding machine 2, and thereby stops welding operation.

It is to be noted that welding operation is stopped actually only when the communication fails more than "C1" times successively. Even if communication errors have occurred ["C1" - 1] times in "C1" times, the welding operation is continued. Such arrangement is naturally needed because operation efficiency drops if the operation of the machine itself is stopped frequently. For example, if communication fails with a frequency of once for ten times, twice for ten times or so, it does not matter. However, if, for example, "C1" = 5 and communication always fails three or four times successively and succeeds only by retrying five times, that is, with the maximum allowable number of retrials, it is a problem because retrials of communication themselves take large time so that the efficiency of welding operation itself drops remarkably unless the root cause of the communication error is removed.

Therefore, in the present embodiment, in addition to the retry counter R1, the communication error counter R2 is provided to count and memorize the number of communication errors which have occurred from the time when the power supply is turned ON or starting of the system. If the value of the communication error counter R2 has reached a predetermined value C2 (Step S16), an alert message is displayed on the LCD 7 of the teaching operation panel to urge an operator to check the communication status or to perform a maintenance of communication lines and their surroundings (Step S17). This intends to prevent a large lowering of the welding operation efficiency due to frequent communication errors.

If the welding operation is stopped and an alarm message is displayed as the number of retrials of communication exceeds the predetermined allowable limit value C1, an operator needs to remove the root cause of the communication error. Also when the status is merely such that an alert message is displayed, it is preferable to remove the cause of the communication error at this stage to perform the welding operation with higher efficiency.

Accordingly, when an alarm is outputted and the welding operation is stopped, or when an alert message is displayed to urge an operator to perform a maintenance, an operator first inputs a demand for log display to the robot controller 1 by operating the teaching operation panel 8 (the demand for log display is detected in the determination of Step S14), and thereby displays, on the LCD 7 of the teaching operation panel 8, a log file LF(x) [where x is a presently designated value satisfying 1 ≤ x ≤ R2] which stores the states of the robot 3 and the robot controller 1 at the tune when the communication error occurred (display is performed in Step S15).

The log file LF(x) may be displayed in any manner. For example, it can be arranged such that information about the robot 3 and the robot controller 1 is displayed according to a display output format as shown in FIGS. 3a and 3b, each time a demand for log display is inputted. FIG. 3a shows an example of display of a log file LF(1), that is, an example of display of information about the robot 3 and the robot controller 1 at the time a first communication error occurred (when the value of the communication error counter R2 was "1"), and FIG. 3b shows an example of display of a log file LF(2), that is, an example of display of information about the robot 3 and the robot controller 1 at the time a second communication error occurred (when the value of the communication error counter R2 was "2"). When the log files LF(x) are displayed in this way on the LCD 7 of the teaching operation panel 8 one by one like cards, it can be arranged such that the log files LF(x) are displayed in time sequence as log file LF(1), log file LF(2), ... [where x is the presently designated value satisfying 1 ≤ x ≤ R2] in response to each input of a demand for log display, or in reverse time sequence as log file LF(R2), log file LF(R2-1), ... [1 ≤ x ≤ R2] by simultaneously operating a shift key, for example.

Naturally, when a CRT, an LCD or the like having a large screen is used as a display, it can be also arranged such that a plurality of log files LF (x1), LF(x2), ... [where x1 ≠ x2 ≠ ...] are displayed at a time on the screen which is divided into tile-like sections.

An operator tries to find out the cause of the communication error comparing a plurality of log files LF(x1), LF(x2), ... with each other. For example, if related information as shown in FIGS. 3a and 3b is displayed, it can be supposed that the communication error is likely to occur in relation to the execution of block (3), because displayed information shows that the communication errors occurred while the same block numbered (3) of the robot driving program was being executed.

Then, the operator calls the robot driving program, displays the source thereof on the LCD 7, and ascertains the execution unit having a block number (3). In the example of FIG. 3c, the execution unit numbered (3) includes an item relative to the start of arc welding. Therefore, it can be supposed that discharge in arc welding produces noise and thereby causes the communication error. In that case, the problem can be solved by fortifying grounding, isolating the communication line 14 from a cable from power source for welding, etc.

If the communication errors occur when the robot 3 takes the same position and posture X, Y, Z, it can be supposed that with that position and posture of the robot, the welding machine 2 approaches the power source for arc welding and picks up noise. Therefore it can be expected that the communication error is prevented by changing the arrangement of the power source for welding, or the like.

If the communication errors occurred approximately at the same time, it can be supposed that the errors were possibly caused by an abnormal state of the power source due to thunderbolt, power stoppage or the like, without problems in the communication line 14 and its surroundings.

If the communication errors occur only when an input/output device other than that used in the present communication (an I/O port 2 when the present communication uses an I/O port 1, or an I/O port 1 when the present communication uses an I/O port 2) operates, the communication error is possibly caused by noise picked up from the other input-output device, and a surge killer or the like is needed to be attached to the other input-output device.

Needless to say, when a large number of communication errors have already occurred and therefore a large number of log files are stored, and only two log files contain a block having the same number, it is premature to think that the content of the block is relevant to the communication error. This applies also to cases such that only two log files contains the same condition in another item, for example, the same operating state of input-output devices. Further, when a large number of log files are already stored, it is not easy for an operator to display all the log files on the screen or print out all the log files to thereby find items common to a plurality of log files.

In such cases, it is advantageous to perform automatic analysis using the CPU 4 to thereby find common items.

In the present embodiment, the format of the log file is such that the block number is given on the first line, the position and posture of the robot (X, Y, Z) on the second, the time on the third, and the indication of an on or off state of each I/O port on the fourth. Thus, it is possible to compare data on each line among the all log files LF(1) to LF(R2) to extract log files showing common conditions.

More specifically, all the log files showing conditions common to a plurality of log files are detected and grouped by each common condition. For example, if there are three log files in which number (3) is memorized in the item of block number, those three log files are treated as one group, and if there are four log files in which number (4) is memorized in the item of block number, those four log files are treated as another one group. Since items such as block number show only integer values, the values of such items can be compared directly as strings of letters or numerals. In contrast thereto, concerning strings of numerals expressing the position and posture of the robot 3 (X, Y, Z) or the like, since a difference in position or the like in a unit of millimeter has little meaning, it is arranged such that log files showing values different by several millimeters from one another are regarded to form the same group. Processing as described above is performed for each item.

In displaying the log files, log files to be displayed are selected by designating a condition in terms of coincidence ratio, that is, the ratio of log files having a common condition to all of the log files, in order to display only the items which seem directly related to the communication error.

For example, if the ratio of the log files having the same block number is 30 % or higher, or if the ratio of the log files having approximately the same position and posture X, Y, Z of the robot 3 is 35 % or higher, those log files are displayed. Needless to say, it is also possible to prepare a program such that selection is performed by designating a plurality of items and their coincidence ratios in the form of logical product or logical sum. Further, it is also possible to arrange a program such that log files are selected to be displayed in descending order of the coincidence ratio.

In the present invention, states of the robot and the robot controller at the time a communication error occurred, including information about a position and a posture of the robot, an operating state of input/output devices, information for identifying a presently executed program, the time when the communication error occurred, and so forth can be displayed on the display device. This makes it possible to find out and remove the cause of a communication error easily.

Further, the number of communication errors which have occurred from a start of operation is counted, and when the counted value exceeds a predetermined value, a message demanding maintenance is displayed. Therefore, it is possible to find out and remove the cause of a communication error before things comes to a stage such that communication errors occur continuously so that the operation of the robot needs to be actually stopped. Furthermore, it is prevented that communication errors continually occur to lower the entire operation efficiency of the robot. Thus, it is possible to perform the operation continuously with high efficiency.

## Claims

1. A method of managing communications between a controller and a peripheral device of a robot, comprising the steps of:
(a) performing communications between said controller and said peripheral device through a communication line to input and output data or signals,
(b) detecting an error of communication in said step (a),
(c) storing a state of the robot and the robot controller at the time when a communication error is detected in said step (b), and
(d) displaying the state of the robot and the robot controller stored in said step (c).

2. A method of managing communications according to claim 1, wherein said step (c) includes a step of storing the time when the communication error is detected.

3. A method of managing communications according to claim 1 or 2, wherein the state of the robot and the robot controller stored in said step (c) includes information about a position and a posture of the robot, an operating state of input/output devices, and information of identifying a program being executed.

4. A method of managing communications according to claim 1 or 2, further comprising the steps of:
(e) counting the number of communication errors detected in said step (b) from a start of operation of said robot;
(f) displaying a message requiring maintenance when the number of detected communication errors counted in the step (e) has exceeded a first predetermined value; and
(g) displaying an error message and stopping the operation of said robot when communication errors are successively detected a second predetermined number of times.
